# EUROPEAN PATENT APPLICATION

(11) **EP 4 465 032 A1**
(43) Date of publication of application: **20.11.2024**
(21) Application number: 23305773.6
(22) Date of filing: 15.05.2023
(51) Int. Cl.: G01N 27/07, G01N 27/414

(54) **LAMINATED ELECTRONIC SENSOR DEVICE AND PROCESS FOR FABRICATION**

(71) Applicant: Grapheal, 38000 Grenoble (FR)
(72) Inventor: DJOHARIAN, Behnaz, 38330 BIVIERS (FR); BOUCHIAT, Vincent, 38330 BIVIERS (FR)
(74) Representative: Regimbeau

(57) **Abstract**

A laminated electronic sensor device comprising:
• a substrate (110) having an upper surface (111),
• a flexible first superstrate (120) having a lower surface (122) coated with a hot melt adhesive, the first superstrate comprising at least one aperture (125),
• a thin conductive material (130) disposed on the upper surface (111) of the substrate (110),
• at least two spaced apart conductive traces (150, 160) making ohmic contact with the thin conductive material (130) to form source and drain electrodes defining a gate region,
wherein the aperture (125) is disposed over an interior region of the thin conductive material (130) that is between the conductive traces (150, 160) to define a cavity (101), the conductive traces being sealed between the superstrate and the substrate by the hot melt adhesive to prevent exposure to a fluid or gas situated within the cavity (101).

## Description

### TECHNICAL FIELD

The field of inventions is laminated electronic sensor devices, and more particularly the fabrication thereof that incorporate Field Effect Transistors (FETs) and Electrochemical Cells (EC) and related devices that incorporate electro-active material.

### TECHNICAL BACKGROUND

FETs using organic thin films and low dimensional materials are known but have yet to achieve wide commercial use due to the lack of commercial fabrication processes that can produce devices that are sufficiently robust for the intended applications, many of which require low-cost single use devices.

A simple assembly method and use of low-cost substrates may enable more cost-effective fabrication of chemical and biosensors and related device that exploit the high sensitivity of analyte binding to some conductive and/or semiconductive materials, particularly two-dimensional semi-conductors, such as graphene that can be functionalized for a specific compound or moiety.

### SUMMARY OF THE DISCLOSURE

Hence, some objectives of the invention are to fabricate arrays of devices and like electroactive devices at low cost and high throughputs using roll to roll processing to laminate at least one flexible substrate to form layered electronic device, which can then be slit or separated into single devices or multi cluster devices for further functionalization of the conductive material as required for the application.

It is another objective to provide laminated arrays of FET and other electroactive device that are flexible and hence suitable with wearable device and/or in digital diagnostic tests and/or robotic devices.

It is another objective to engineer an efficient gating of the FET by formation of an electrolytic double layer at the semiconducting channel surface. For that purpose, the drain and source metallic electrodes (connecting the semiconducting channel) must not be in direct contact with the liquid or gas of interest. This to avoid direct current leakage from the gate electrode to the drain and/or source electrodes. A possible way is to protect the connecting electrodes with an insulating material on top.

The disclosure relates to a laminated electronic sensor device comprising:
- a substrate having an upper surface,
- a flexible first superstrate having a lower surface coated with a hot melt adhesive, the first superstrate comprising at least one aperture,
- a thin conductive material disposed on the upper surface of the substrate,
- at least two spaced apart conductive traces making ohmic contact with the thin conductive material to form source and drain electrodes defining a gate region,
wherein the aperture is disposed over an interior region of the thin conductive material that is between the conductive traces to define a cavity, the conductive traces being sealed between the superstrate and the substrate by the hot melt adhesive to prevent exposure to a fluid or gas situated within the cavity.

In some embodiments, the laminated electronic sensor device comprises a conductive pad that is spaced apart from ends of the conductive traces and the thin conductive material to form a gate electrode in which the conductive pad is sealed between the superstrate and the substrate.

In some embodiments, the source and drain electrodes extend in parallel and are spaced apart along a first direction, the device further comprising a gate electrode pad having a first side proximally adjacent to but offset away from an edge of the thin conductive material that extends orthogonal to the first direction in which the source and drain electrode extend proximal to but spaced away from the gate electrode pad.

In some embodiments, the laminated electronic sensor device further comprises a second superstrate disposed over the first superstrate, in which the second superstrate supports a conductive pad forming a gate electrode disposed over the aperture and the gate region.

In particular, the sensor device may comprise at least one intermediate layer between the first and second superstrates, the intermediate layer having at least one lateral channel for receiving or removing one of a gas and liquid from a second aperture in the second superstrate and transporting it to the aperture in the first superstrate that is above the thin conductive layer.

Preferably, the thin conductive material is a two-dimensional semi-conductor.

In particular, the two2-dimensional semi-conductor is graphene.

In some embodiments, the hot melt adhesive is EVA.

In preferred embodiments, the first superstrate is a PET or a TPU film.

In some embodiments, the laminated sensor device comprises a plurality of parallel thin conductive materials and of respective source and drain electrodes.

In particular, the laminated electronic sensor device may have a fork shape, wherein each conductive material and respective source and drain electrodes are arranged in a respective tine of the fork.

Another object of the disclosure is a process for fabricating an electronic sensor device, the process comprising the steps of:
a. providing a thin conductive material on a portion on of an upper surface of a generally planar substrate,
b. providing a flexible superstrate having an inside surface covered by a hot melt adhesive, including;
   - at least two conductive traces extending in a spaced apart relationship on the inside surface, and
   - at least one aperture with a perimeter within a boundary corresponding with the closest edges of the spaced apart conductive traces,
c. laminating the flexible superstrate so the lower surface thereof adheres to the upper surface of the generally planar substrate in a mutually aligned state to urge the conductive traces to make ohmic contact with the thin conductive material while the hot melt adhesive flows to seal the conductive traces from a boundary of the aperture with the flexible superstrate.

In some embodiments, the conductive traces are formed by printing a conductive ink onto the lower surface of the superstrate, and optionally on the upper surface of the substrate.

The process may further comprise connecting the conductive traces to a printed circuit board.

Another object of the disclosure is a process for detecting an analyte in a fluid sample, comprising providing the fluid sample to the cavity of the laminated flexible electronic sensor device as described above to the fluid sample and detecting a variation in a conductance of the thin conductive material in the gate region due to an interaction of the analyte with the thin conductive material.

### BRIEF DESCRIPTION OF THE DRAWINGS

The above and other objects, effects, features, and advantages of the present invention will become more apparent from the following description of the embodiments thereof taken in conjunction with the accompanying drawings.
FIG. 1A is a schematic top plan view of a first embodiment of the device, whereas FIG. 1B is a cross-sectional elevation thereof at section line B-B on FIG. 1A.
FIG. 2A and 2B are expanded view of the region within the broken line boundary in FIG. 1B, in which FIG. 2A shows the construction of the layers in the device before lamination together in FIG. 2B.
FIG. 3A is a schematic top plan view of a second embodiment of the device, whereas FIG. 3B is a cross-sectional elevation thereof at section line B-B in FIG. 3A and FIG. 3C is a cross-sectional elevation thereof at section line C-C in FIG. 3A.
FIG. 4A and 4B shows the construction of the layers in the device in FIG. 3A corresponding to section lines B-B and C-C respectively before lamination together in FIG. 3B and 3C.
FIG. 4C is a schematic top plan view of a third embodiment of the device.
FIG. 5 is a top plan view of a superstrate prior to lamination in an alternative embodiment of the device.
FIG. 6A and 6B are schematic sectional diagrams of an embodiment of the lamination process between rollers.
FIG. 7 is a schematic cross-sectional elevation view of FET portion of the device shown in surrounding packaging for use as a consumer or diagnostic product.
FIG. 8A is a schematic top plan view of an embodiment of the sensor to be operated as an electrochemical cell, FIGS. 8B and 8C are schematic top plan views of embodiments of the device to be operated as a gas sensor, respectively without any gate electrode and with a gate electrode and a back gate electrode.
FIGS. 9A-10B are schematic top plan views of layers prior to lamination to form a fourth embodiment of the device.
FIG. 11 is a schematic perspective exploded view of the embodiment of the formed by lamination of the layers in FIG. 9A-10B.
FIG. 12A and 12B are schematic cross-sectional elevation view of the embodiment of FIG. 9A-11 taken at section lines A-A and B-B respectively in FIG. 9B, which also corresponds to the placement of section lines A-A and B-B in FIG. 10B.
FIG. 13 is a schematic plan view of an array of sensors.

### DETAILED DESCRIPTION OF EMBODIMENTS

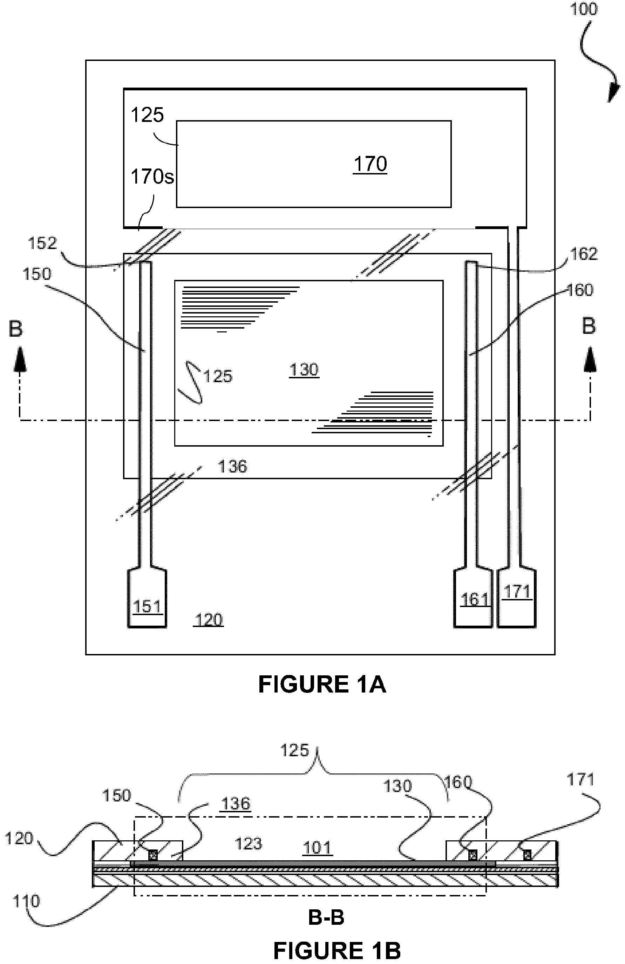

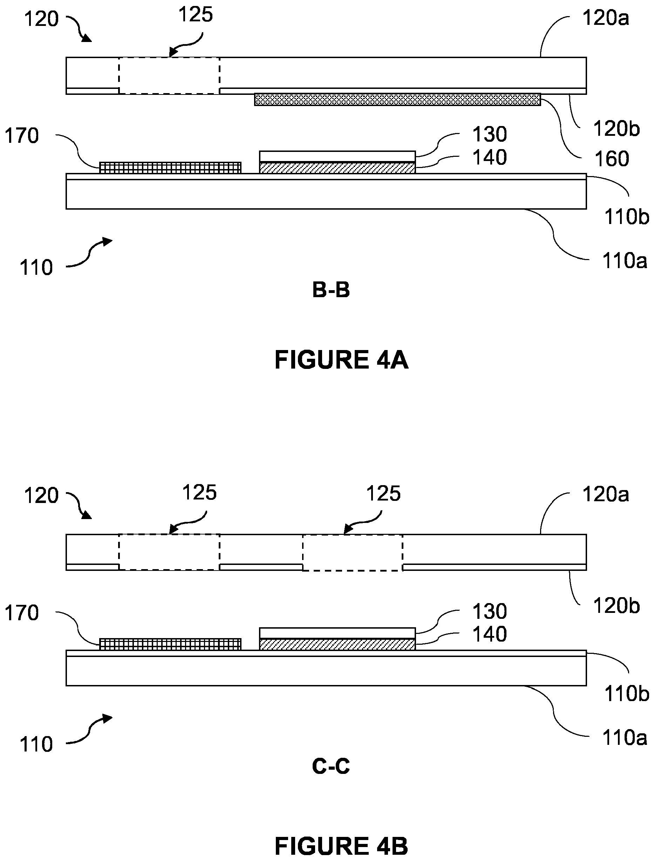

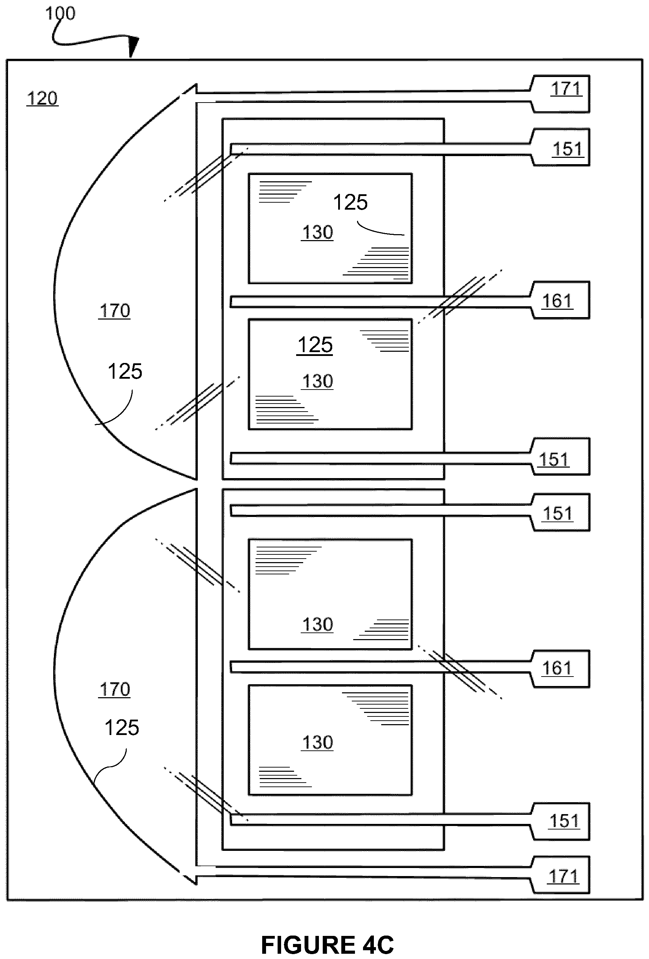

Referring to FIGS. 1A through 13, wherein like reference numerals refer to like components in the various views, there is illustrated therein a new and improved laminated electronic flexible sensor device, generally denominated 100 herein.

The laminated device generally comprises source, drain and (optionally) gate electrodes arranged on a thin conductive material disposed on a substrate so as to form an ohmic contact with the thin conductive material. The thin conductive material forms a channel of a Field Effect Transistor (FET).

At least one area of the thin conductive material is exposed to external fluids, such as liquid or gas samples.

When the device is operated in a liquid, there is no need that the gate electrode is in immediate vicinity of the channel, as the liquid may act as an electrolytic double layer (EDL) enabling gating from a remote electrode. In that case, drain and source electrodes have to be passivated with an insulating layer to avoid electric leakage with the liquid.

More precisely, in the laminated device, the source and drain electrodes are embedded between the substrate and a superstrate arranged over the substrate. The superstrate comprises a flexible film coated with a hot melt adhesive, such as Ethylene Vinyl Acetate (EVA), on the side of the film facing the substrate. The superstrate comprises at least one aperture exposing the thin conductive material. As will be explained in more detail below, the device is manufactured by laminating the substrate and the superstrate with the thin conductive material and the electrodes in-between. Said lamination is carried out at a temperature causing at least partial fusion of the hot melt adhesive, which flows over the drain and source electrodes on the sides of the aperture. Surprisingly, the hot melt adhesive is able to cover the electrodes and isolate them from external fluids without impeding intimate electrical contact between the electrodes and the thin conductive material. In this way, the source and drain electrodes are in electrical contact only via the thin conductive film.

In some embodiments, the aperture can be formed locally in the superstrate, above the thin conductive material, to form a cavity. Thus, a fluid to be analyzed may be put in direct contact with the thin conductive material in said cavity. For example, if the fluid is a liquid, one or more droplets of said liquid may be deposited in the cavity.

In other embodiments, the cavity can be formed as a microfluidic channel guiding the fluid sample from a lateral side of the device to the thin conductive material. This is in particular advantageous when the device is embedded in a sealed casing or package preventing a user from touching the thin conductive material in order to avoid damaging or contaminating the thin conductive material.

The device can be used as a sensor to detect at least one analyte of a fluid disposed in the aperture in contact with the thin conductive material.

To that end, the electrodes may be connected to a printed circuit board comprising electronic components and circuitry configured to determine a property of the analyte based on the conductance of the channel of the device. The electric connection of the electrodes to the printed circuit board may be made by various methods. In some embodiments, the electric connection may be ensured by a springloaded needle (also known as pogo pin). In other embodiments, the electric connection may be formed by ultrasonic or hotmelt welding. Alternatively, the electric connection may be formed by crimping.

Preferably, the device also comprises a reference electrode which allows determining which analyte has been detected by comparison of the electric potential of said reference electrode and the potential of the gate region. In some embodiments, the reference electrode is the gate electrode. Alternatively, the reference electrode is distinct from the gate electrode, thereby advantageously allowing operating the device in an electrochemical cell mode. To that end, the reference electrode is covered with Ag/AgCl.

The device can be manufactured by simple techniques that will be described in more detail below. In particular, a single lamination step allows assembling the device, forming the electrical connection between the source and drain electrodes and the thin semiconductor material, and passivating the source and drain electrodes.

In some embodiments, the device may be individualized to be used as a single sensor, for example in a wearable device.

In other embodiments, several devices may be combined into an array of sensors allowing detecting analytes simultaneously in a plurality of fluid samples. For example, several parallel devices may be formed by lamination of a same substrate / superstrate assembly, and the assembly may be cut between adjacent devices in the form of a fork, thereby forming one (or more) device(s) in each tine of the fork. The pitch of the devices is chosen to be compatible with the pitch of a multi-well plate, with the number of the devices equal to the number of wells in a line of the plate. The fork can then be plugged onto the arm of a pipetting robot used for lab assays. The robot is configured to dip the devices simultaneously in the wells of the line of a plate. For example, if an assay is to be carried out in a 96-well plate having twelve lines of eight wells, the fork may comprise eight devices each arranged in a respective tine.

In yet other embodiments, several devices may be combined into an array of sensors allowing detecting different analytes simultaneously in a same fluid sample to increase productivity of the assay.

The sensor(s) may work in a similar way as a chemoresistor or as a field effect biosensor.

In accordance with certain aspects of the present innovations the laminated FET sensor or device 100 may comprise a substrate 110 having an upper surface 111 and a superstrate 120 extending over the upper surface 111 of the substrate 110 and having a lower surface 122 and an opposing upper surface 121. The superstrate 120 has one or more apertures 125 that extend generally vertically between the upper surface 121 and lower surface 122, with sidewalls 123 that are generally vertical and orthogonal to the plane of the upper surface 121 and lower surface 122. In the present text, it is assumed that the laminated FET sensor or device extends in a horizontal direction, with the substrate below the superstrate. The terms "upper" and "lower" or "above" and "below" designate relative positions in said orientation of the laminated FET sensor or device. The term "vertically" thus designates a direction perpendicular to the plane of the substrate and the superstrate. Of course, in use, the laminated FET sensor or device may be manipulated and thus oriented in any other direction than the horizontal direction. In particular, as mentioned above, one or several devices may be plugged onto the arm of a pipetting robot and dipped into a well and is/are thus oriented vertically.

A relatively thin conductive material 130, such as a semi-conductor, is disposed on the upper surface 111 of the substrate 110, between the upper surface 111 of the substrate 110 and the lower surface 122 of the superstrate 120. A pair of spaced apart conductive traces 150 and 160 extend in a spaced apart relationship along a region of the thin conductive material 130 and make ohmic contact therewith which forms a source electrode and drain electrode.

A conductive pad 170, acting as the gate, may be disposed between the upper surface 111 of the substrate 110 and the lower surface 122 of the superstrate 120 having a first side 161 spaced part from the thin conductive material 130 and ends 152 and 162 of the spaced apart conductive traces 150 and 160 respectively.

At least one aperture 125 is disposed over an interior region of the thin conductive material 130 that is between the conductive traces 150 and 160 and the conductive pad 170. To form a gate electrode, at least one additional aperture 125 is disposed over the conductive pad 170. Further, perimeter portion 136 of the thin conductive material 130 between the conductive traces 150 and 160 is sealed between the superstrate 120 and the substrate 120 to encapsulate the conductive traces 150 and 160 to prevent exposure to a fluid or gas situated between the opposing sidewalls 123 of the aperture(s) 125.

In other aspects a laminated FET sensor or device 100 may comprise a laterally offset gate electrode, such as pad 170, and source 150 and drain 160 electrodes extending in parallel and spaced apart along a first direction and making contact with a thin conductive material. The gate electrode or pad 170 has a first side 170s proximally adjacent to but offset away from an edge 137 of the thin conductive material 130, such edge 137 also extends orthogonal to a first direction in which the source electrode 150 and the drain electrode 160 extend proximal to but also spaced away from the gate electrode pad 170.

The gate electrode pad 170 as configured in this embodiment is optional but enables the tuning of the conductance of the channel 138 formed in the thin conductive material and to choose an optimal working point for the sensitivity of the sensor to an analyte.

When the conductive material is a preferred semi-conductive it may be functionalized to provide a preferential absorption or bonding to a selective analyte. The absorption or bonding of such an analyte changes the conductance of the channel 138 allowing the detection thereof by measuring the changes in current flow and/or voltage between the source electrode 150 and the drain electrode 160.

In preferred embodiments the substrate 110 and superstrate 120 are flexible films, although various devices may also be fabricated by the innovative process when the substrate 110 is relatively rigid. Non-limiting examples of relatively rigid substrates are alumina, silicon nitride, silicon carbide, silicon which is passivated with a native oxide layer (SiOz or silica) or a dielectric coating that is organic or inorganic, and the like. By "flexible" is meant in the present text that the film can be bent in at least two orthogonal directions without breaking or being damaged.

Examples of flexible substrate 110 or superstrate 120 include a film of polyethylene terephthalate (PET) or of polyethylene naphthalate (PEN), a polyimide film, a polyamideimide film, a film of poly-2,2'-(m-phenylene)-5,5'-bibenzimidazole, or an elastomer film such as a thermoplastic polyurethane (TPU). Generally, a flexible substrate with a thickness of about 25 to 125 micrometers is suitable for the lamination processes disclosed herein.

As mentioned above, at least the superstrate is coated with a hot melt adhesive. The hot melt adhesive is preferably EVA, but could be alternatively an elastomer such as a silicone-based polymer or co-polymer, or a polyurethane reactive hot melt adhesive.

The substrate need not be coated with the hot melt adhesive. Indeed, a good bonding between the substrate and the superstrate can generally be obtained with the hot melt adhesive only present on the superstrate.

The substrate and the superstrate may not be formed of the same material. For example, the substrate may be a sheet of paper, with or without a hot melt adhesive coating.

The conductive material is preferably a semi-conductor, and more preferably a 2-dimensional semi-conductor such as without limitation graphene, transition metal dichalcogenides, such as molybdenum disulfide (MoS₂), tungsten disulfide (WS₂), hafnium diselenide (HfSe₂), ruthenium diselenide (RES₂) and zirconium diselenide (ZrSe₂), phosphorene, boron nitride and silicene, and related super lattice structures.

Alternatively, the semi-conductor can also be silicon, p or n doped silicon, as well as other semiconductors such as germanium, gallium, gallium arsenide, which are optionally p or n doped, zinc oxide, doped zinc oxide, silicon carbide, doped silicon carbide, as well as organic semiconductors such as Rubrene, Pentacene, Polythiophene, poly (3-hexylthiophene-2,5 diyl) (P3HT), poly (3,4-ethylenedioxythiophene) polystyrene sulfonate copolymers (PDOT-PSS) and the like. Such a semiconductor can also be a mesh of semiconductors and metallic nanofibers, such as carbon nanotubes, semiconducting nanowires or a mix, combination of the above, and the like. Organic semiconductors can be placed on the substrate 110 by spin coating, curtain coating, or micro-spray coating from a chemical solution, and the like.

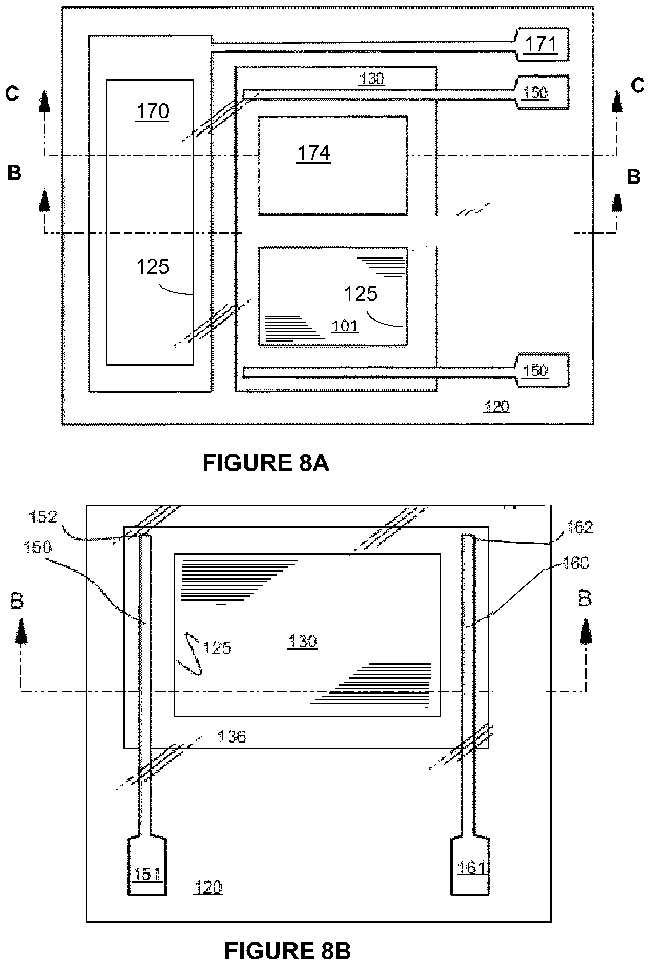

A gate electrode may not be required in applications in which the thin conductive material is inherently electroactive or can be rendered so by chemical modification or doping, so that the conductivity or related electrical property that can be measured between the two electrodes when an analyte is detected. See the example shown in FIG. 8B, which can be used as a gas sensor.

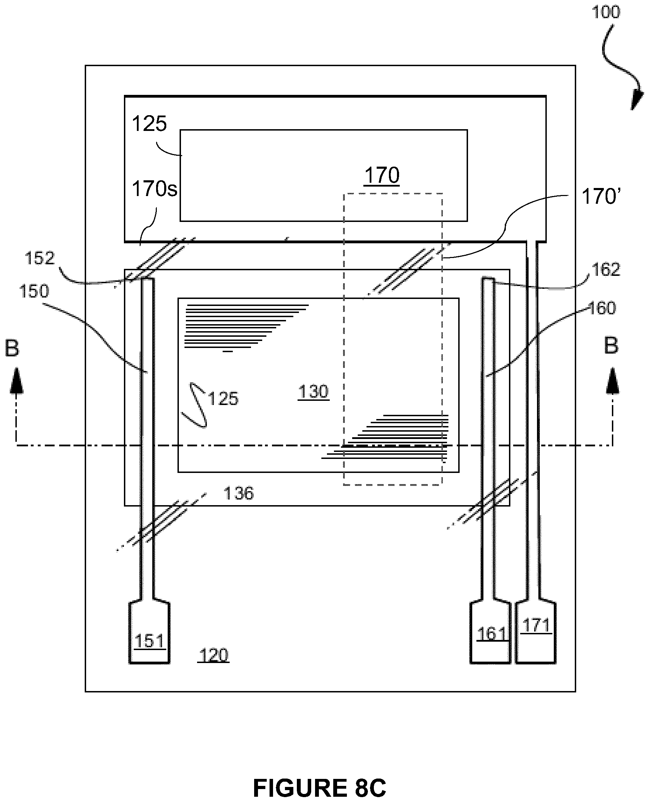

In some embodiments, as shown in FIG. 8C, a back gate electrode 170' can be provided under the thin conductive material 130. To that end, a conductive trace is deposited onto the substrate before depositing the thin conductive material.

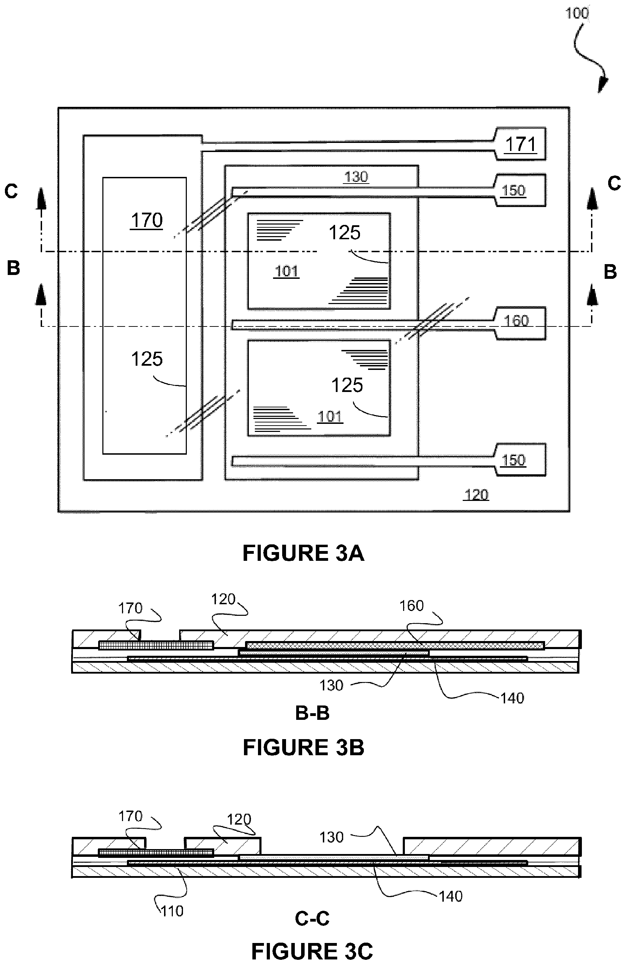

FIG. 8A illustrates an embodiment configured to form an electrochemical cell. As compared to the architecture of FIG. 3A, one cavity 101 is replaced by a counter electrode 174. Said counter electrode may be formed by depositing a silver or platinum ink onto the substrate. One of the conductive traces 150 is used as a working electrode. The conductive trace 171 is covered with Ag/AgCI and is used as a reference electrode.

The conductive or semi-conductive material 130 is preferably bonded to the substrate 110 with an intermediate layer 140, and such intermediate layer 140 is preferably a pliable conformal coating. Non-limiting examples of pliable conformal coatings are poly(para-xylylene) or a co-polymer thereof including chlorine substitution on the benzene ring or CF₂ linking units between each benzene ring, polyimide, polyamides, polyamideimide, silicone polymers, acrylic, epoxy, polyurethane and styrene rubber co-polymers. Conformal coatings of poly(para-xylylene) or a co-polymer thereof are readily deposited by Chemical Vapor Deposition (CVD), while other organic polymeric coatings may be deposited by spin coating, curtain coating, or micro-spray coating from a chemical solution, and the like.

A thin film of hexagonal boron nitride, which is a dielectric material, may be intercalated between the conductive material 130 and the intermediate layer 140 in order to optimize electronic properties of the thin conductive material. Said hexagonal boron nitride layer may be formed by CVD. In particular, when the thin conductive material is graphene, a graphene film may be formed onto a suitable substrate, the boron nitride film is deposited on the lower face of the graphene film opposite to the substrate, the intermediate layer is deposited on the boron nitride film, then the substrate is removed to expose the upper face of the graphene.

When the semi-conductive material 130 is an organic coating, such as Rubrene, Pentacene, Polythiophene, P3HT, PDOT-PSS and the like, it may be sufficiently pliable to dispose on the substrate 110 or superstrate 120 or survive deformation therewith that the intermediate layer 140 may not be necessary.

A preferred intermediate layer 140 when the semi-conductor is a thin 2-dimensional semi-conductor such as graphene is poly(para-xylylene) or a co-polymer thereof including chlorine substitution on the benzene ring or CF2 linking units between each benzene ring, in which preferred embodiments thereof are disclosed in US Patent Application No. 2008/0057361 A1.

See also PCT application for a portable and single use device for testing and permitting access to a restricted area based on the test results, WO 2021/224578 A2 and issued US patents US 11,040,191 B2; US 10,184,184B2 and US 9,458,020 B2.

At least one of the two conductive traces 150 and 160 is a solidified conductive ink compound which may comprise one or more of a form of carbon, such as carbon black or graphene, as well as silver, gold, copper, platinum or palladium and alloys thereof in an organic binder. Conductive traces or a support for at least part of the conductive traces 150, 160 and pad 170 can be copper, alloys of copper and other metal, optionally deposited or shaped by screen printing, inkjet printing, electroplating, sputtering or any chemical or physical deposition process.

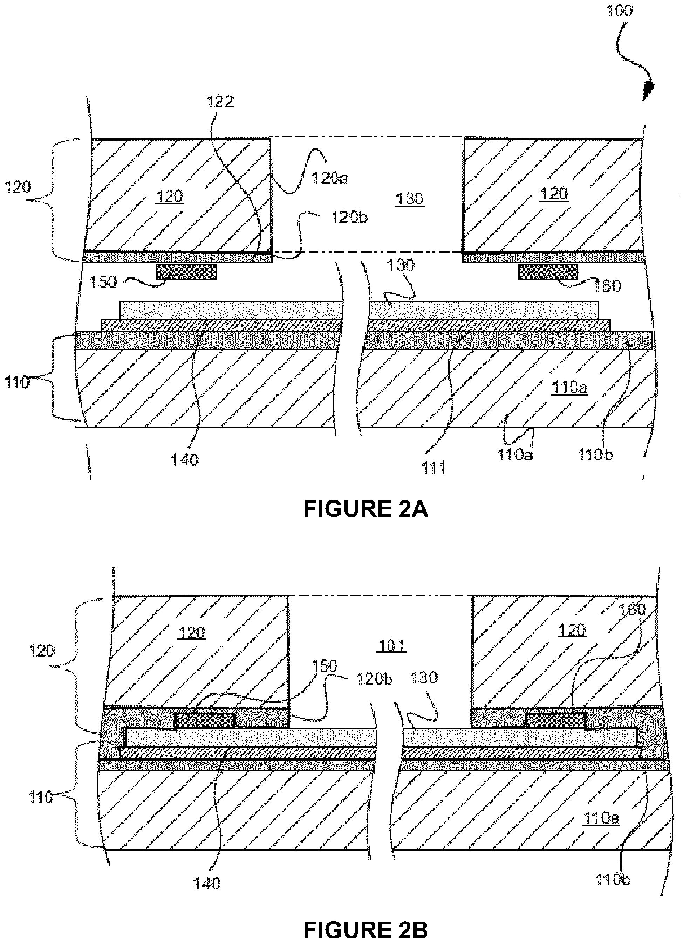

Another aspect of the invention is a process of laminating such devices 100, as the lamination process 1000 when deployed with an appropriate form of substrate 110 and superstrate 120 provided for the sealing of the conductive traces 150 and 160 on or adjacent to the thin conductive material 130 from the cavity 101 between the conductive material and the sidewall 123 of the aperture 125, as will be further elucidated with respect to FIG. 2A and 2B.

FIG. 2A shows the substrate 110 spaced away from the superstrate 120 above it. Note the aperture 125 in the superstrate 120 is disposed over an interior region of the thin conductive material 130 that is between the conductive traces 150 and 160. The flexible film of the superstrate 120 may have two or more layers, with a thicker supporting layer 120a to provide for workability in the process of fabrication and a disposed on the lower surface thereof a thinner layer 120b having a bottom surface forming the lower surface 122 of the superstrate 120. The bottom layer 120b is a thermoplastic adhesive that is selected from the group consisting of ethylene vinyl acetate copolymer (EVA), silicone-based polymers and co-polymers, polyurethane reactive hot melt adhesives, and includes adhesives capable of thermosetting after flowing.

The substrate 110 preferably has a similar layer structure to the superstrate 120, with a thicker supporting layer 110a to provide for workability in the process of fabrication and, disposed on the supporting layer, a thinner layer 110b having a top surface forming the upper surface 111 of the substrate 110. However, in some embodiments, the thinner layer may be omitted.

The two conductive traces 150 and 160 are deposited on the layer 120b, for example by printing a conductive ink on the layer 120b. The conductive traces may be screen printed using a mesh screen to transfer ink onto the layer, with a stencil forming a barrier that limits the ink to the specific areas corresponding of the conducting traces, or printed by an ink-jet printer, or deposited by any other suitable method. Advantageously, similar conductive traces (not shown) are deposited on the upper surface of the substrate, so as to be aligned with the conductive traces of the superstrate during lamination. Indeed, the inventors have found that assembly such upper and lower conductive traces increases the electrical conductivity of the source and drain electrodes and improves the reliability of the device, in particular when it is subjected to mechanical bending and pressure.

The aperture 125 is cut in the superstrate 120, at a distance from the edges of the conductive traces.

The thin conductive material 130 is bonded onto the upper surface 111 of the substrate 110. For example, a double-sided adhesive may be attached to the lower face of the thin conductive material 130 and then to the upper surface 111 of the substrate 110.

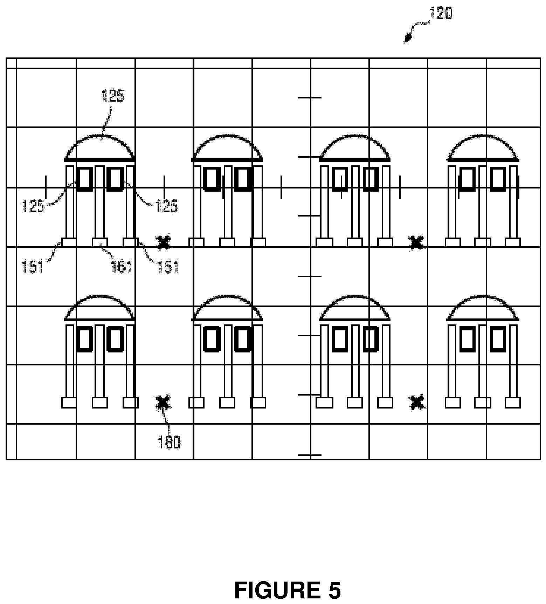

The superstrate and the substrate are superimposed, preferably using alignment marks 180 (see an example in FIG. 5) to ensure that the conductive traces 150 and 160 are able to contact the thin conductive material and the aperture faces the thin conductive material.

Hence in a process of lamination, which is preferably a thermal lamination process, the hot melt adhesive at the edge of the sidewall 123 flows about the perimeter of the thin conductive layer 130 into a perimeter portion 136. This flow of the thermoplastic adhesive seals the two conductive traces 150 and 160 so they are not exposed to any potentially reactive fluid or gas deposited in the cavity 101 when the sensor device 101 is used.

This lamination process 1000 when deployed with conductive traces 150 and 160 of printed silver ink also allows the silver ink to form an ohmic contact at the interface with the graphene semi-conductor layer 130. In particular, the heat softens the silver ink and reduces the risks of cracks in the conductive traces. The pliable conformal coating 140 may aid in absorbing energy in the lamination process, avoiding damage to the fragile monolayer of carbon atoms. As the conductive traces 150 and 160 first make contact with the thin conductive material layer of graphene 130, the thermoplastic adhesive 120b does not flow between them. The conductive silver particles or silver ions cannot flow out of the sealed region and contaminate the exposed portion of the semi-conductor in the cavity 101, which would degrade the sensing capacity. It was also fortuitously discovered that, under lamination conditions, the conductive silver ink will make ohmic contacts with the graphene layer while the hot melt encapsulates and protects those conductive traces and pads that form electrodes from being exposed on their side to the liquid.

FIG. 3A- 4C illustrate the device 100 with multiple cavities 101 and conductive traces to the thin conductive layer(s) 130, as well as multiple thin conductive layers. The conductive traces 150, 160 and a conductive trace 171 from the conductive pad 170 all terminate at electrical contact pads 151, 161 and 171 at the edge of the device 100. The conductive pad 170 is deposited on the upper surface of the substrate. An aperture 125 is formed in the superstrate over an interior region of the conductive pad 170.

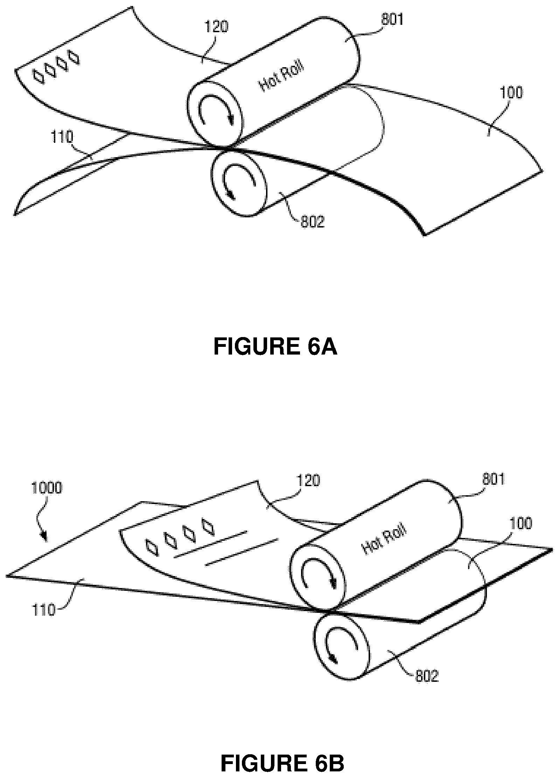

FIG. 5 is a plan view of a layer that can be fabricated in roll-to-roll processing prior to the lamination process in FIG. 6. FIG. 5 shows a preferred embodiment of a superstrate 120 containing sufficient conductive traces around multiple apertures 125 to form multiple device in a single sheet of film, and then remove the laminated device components by cutting or slit the film for packaging in a protective cover for use.

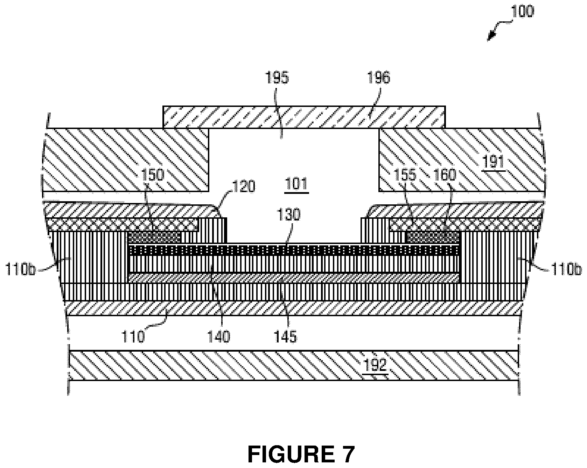

FIG. 7 is a general illustration in section view of protecting packaging around a device 100 that can optionally be used by consumer for home testing. The device 100 is preferably enclosed in protective packaging that is a plastic shell with a rigid bottom 192 and a rigid top 191 with at least one central aperture 195 over the thin conductive layer(s) 130. The central aperture 195 is protected from damage in shipping and handling before exposing the thin conductive layer(s) 130 to analyte by the removable plastic film 196, which is bonded weakly the perimeter of the aperture 195 so it can be peeled away before use. The source and drain electrodes 150 and 160 can also be deposited on a monolithic conductive layer 155, such as a sputtered, electroless or electroplated patterned metallic film, such as copper, gold, palladium or platinum, and alloys thereof.

In the lamination process illustrated with respect to FIG. 8A and 8B a top or upper 801 and bottom or lower 802 rollers that are stacked to form a continuous contact and pressure zone at the common nip region. In FIG. 8A the lower substrate 110 and upper superstrate 120 are both flexible and when aligned are urged together when fed into the nip between the upper 801 and lower 802 rollers. At least one of the upper 801 and lower 802 rollers may be heated to cause the adhesive layer(s) 110b, 120b to flow and bond with the adjacent layer in the laminate. The lower substrate 110 in FIG. 8B may be rigid or semi-rigid while the flexible substrate 120 is fed into the nip between the upper and lower roller to be urged against it be the upper roller, which is preferably heated to cause the adhesive layer(s) 11 0b, 120b to flow and bond with the adjacent layer in the laminate.

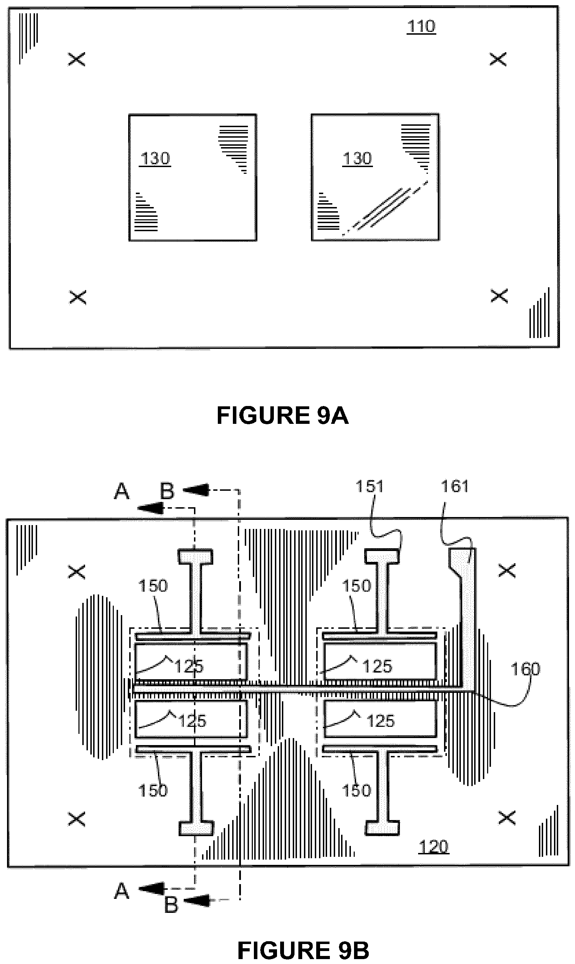

FIGS. 9A-12B illustrate another embodiment of the invention in which device 100 has two regions of the relatively thin conductive material 130, each capable of providing two individual sensor elements, each region being associated with a separate conductive pad 170 that forms a gate electrode to the three or four sensor regions, each region for a liquid or gas contacting the thin conductive layer 130. This gate electrode 170 may extend generally about the same areal region of the relatively thin conductive material 130 but is disposed above it on a second superstrate 220. Another layer 210 is disposed between the second superstrate 220 and the first superstrate 120. Layer 210 may have one or more complexly patterned fluid channel 211 for directing the fluid or gas containing the analyte to the three or four sensor regions. The patterned fluid channel 211 may start and finish with larger opening or apertures 215. The four gate electrodes 170 are connected via a conductive trace 178 between the device contact pad 172 and the end of the trace 171.

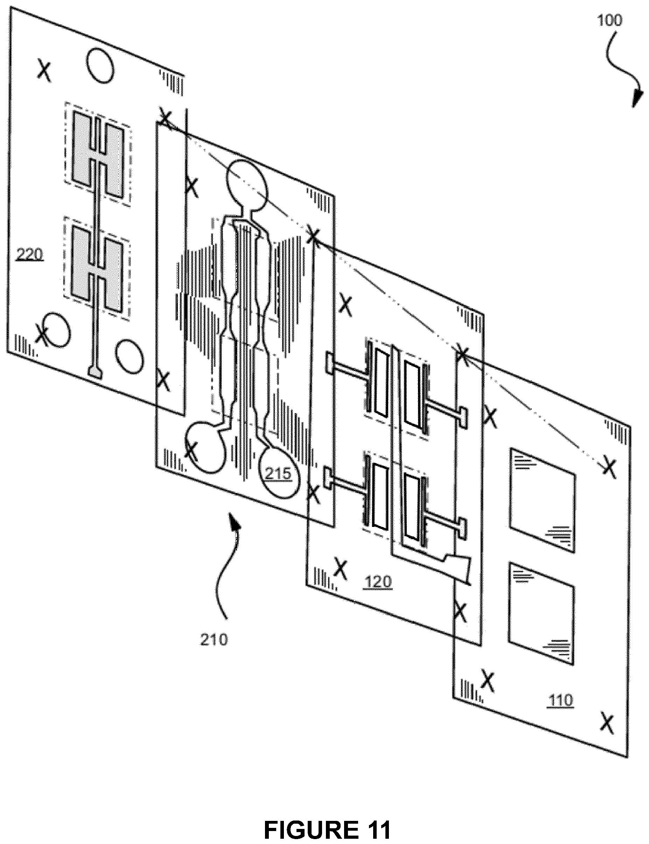

As to the lamination process 1000 for the layers 110, 120, 210 and 220 to form the fourth embodiment of FIGS. 11-12B, one or both of the intermediate layer 210 and the second superstrate 210 may have adhesive or reactive bonding layer 110b on at least one of the outer upper or lower surface when fed into the nip as in FIG. 8A. All four layers can be laminated at once, or pair wise followed by a third lamination. Alternatively, three lamination steps may be deployed, adding only of or more layers in each step. The order of lamination may take into account substrate thickness and fragility.

The second superstrate 220 has a plurality of apertures 225 for adding or removing fluid, such as either a gas or a liquid to one or more fluid channels 211, which when the lamination process is complete allows analyte to be introduced in the upper open aperture 225, flow downward to the apertures 215 in the intermediate layer 210 and then into the patterned fluid channel 211 to reach the sensor active conductive layer 130 in cavity 101. The fluid channel 211 may be split as shown into an upper channel 211u and a lower channel 211l. The apertures 225 are 30% smaller in diameter than the apertures 215 to create a cavity effect and force the fluid travel in channel 211 by capillarity effect.

To facilitate understanding the relation between the components of layers 110, 120, 210 and 220, a broken line outline of the 2 regions of the relatively thin conductive material 130 is illustrated in FIGS. 9B-10B. The four "X"- marks on each layer, set generally adjacent to each corner of each layer, may be printed to facilitate alignment prior to lamination.

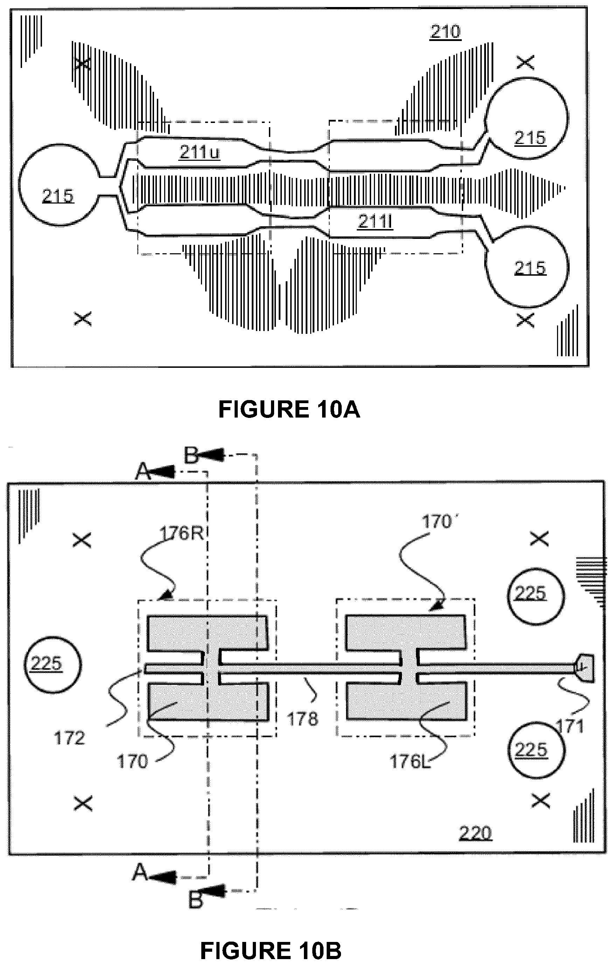

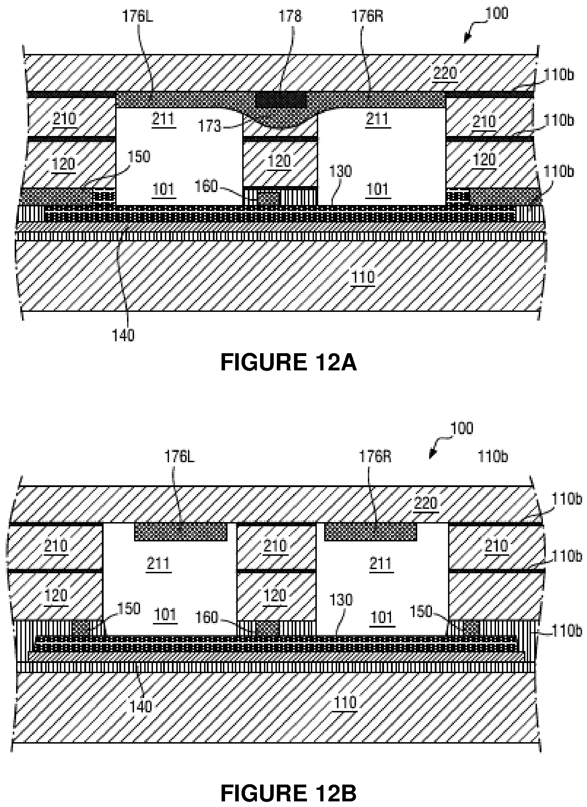

FIG. 10B illustrates the second superstrate 220 has two sets of generally "H" shaped gate electrode pads 170 connected by a common conductive trace 187 that extends from the edge pad 171 for external contact to the end 172 making electrical connection with the both pads 170 and 170' in a narrow central or medial region 173 of each, in which the left and right arms 176 and 177 of each pad 170 then 170' extend orthogonal away for the connect with the medial region both towards and away from the direction of the end contact 172 forming the general shape of the letter "H". Each of the left and right arms 176L and 176R of the "H" are situated above and between the regions between the portion of the conductive traces electrodes 150 and 160 that form the source and drain electrodes over the thin conductor region 130. The conductive trace 178 extends across the superstrate 220 and contacts the medial region 173 of the each "H" shaped pad 170, as illustrated in the sectional view in FIG. 12A.The conductive trace 178 is preferably a monolithic conductive layer such as a sputtered, electroless or electroplated patterned metallic film, such as copper, gold, palladium or platinum, and alloys thereof. Likewise in the various embodiments, the larger external contact 151, 161 and 171 are formed by extending traces of conductive ink to monolithic conductive layer on the flexible film 110/120 or a rigid substrate 110.

It should be noted that in this embodiment, a single drain electrode 160 is medial between the left and right arms 176 and 177 extending below the or medial region 175 of each of the conductive pads 170 and 170 , terminating in conductive pad 161 on superstrate 220. The four drain electrodes 150 are disposed on the outside of the left and right arms 176 and 177 provided on the first superstrate layer 120.

The apertures 125 may have dimensions of less than a mm to larger than several mm depending on how they are used to sense an analyte in a gas or fluid. If the fluid needs to be applied in drop, the apertures should be at least about 1 or 2 mm in width in each orthogonal direction to enable a user to accurately apply liquid of interest accurately to assure the cavity 101 is filled with the fluid.

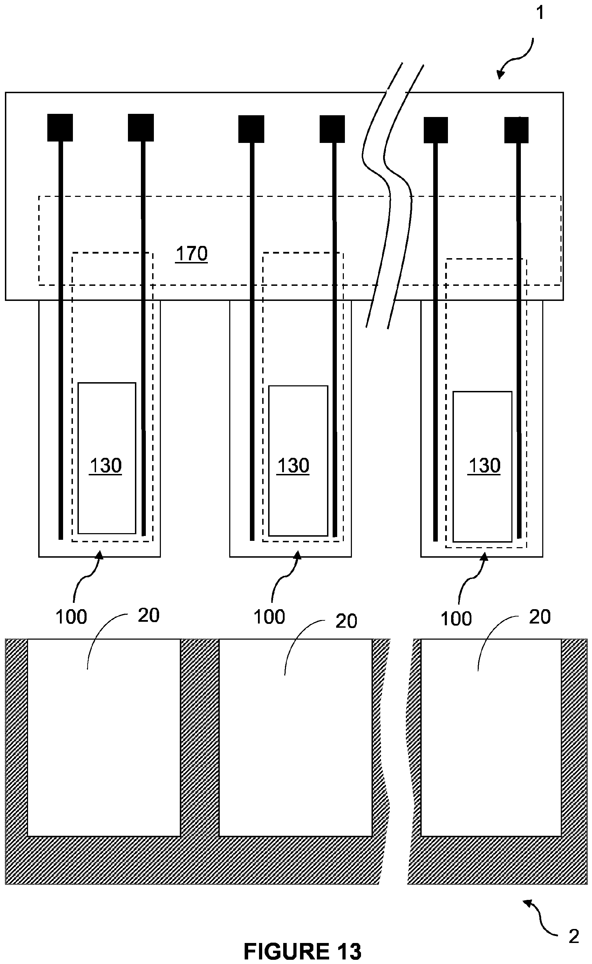

FIG. 13 illustrates an embodiment of an array 1 of sensor devices 100 arranged in the form of a fork, each sensor device 100 being located in a respective tine of the fork. In the illustrated embodiment, three tines are represented, but the number of tines may be choses depending on the intended use of the array. The pitch of the devices is chosen to be compatible with the pitch of a multi-well plate 2, with the number of the devices 100 equal to the number of wells 20 in a line of the plate. The fork can then be plugged onto the arm of a pipetting robot (not shown) used for lab assays. The robot is configured to dip the devices simultaneously in the wells of the line of the plate 2. For example, if an assay is to be carried out in a 96-well plate having twelve lines of eight wells, the fork may comprise eight devices each arranged in a respective tine.

While the various innovations have been described in connection with a preferred embodiment, it is not intended to limit the scope of the invention to the particular form set forth, but on the contrary, it is intended to cover such alternatives, modifications, and equivalents.

## Claims

1. Laminated electronic sensor device comprising:
• a substrate (110) having an upper surface (111),
• a flexible first superstrate (120) having a lower surface (122) coated with a hot melt adhesive, the first superstrate comprising at least one aperture (125),
• a thin conductive material (130) disposed on the upper surface (111) of the substrate (110),
• at least two spaced apart conductive traces (150, 160) making ohmic contact with the thin conductive material (130) to form source and drain electrodes defining a gate region,
wherein the aperture (125) is disposed over an interior region of the thin conductive material (130) that is between the conductive traces (150, 160) to define a cavity (101), the conductive traces being sealed between the superstrate and the substrate by the hot melt adhesive to prevent exposure to a fluid or gas situated within the cavity (101).

2. Laminated electronic sensor device according to claim 1, further comprising a conductive pad (170) that is spaced apart from ends of the conductive traces (150, 160) and the thin conductive material (130) to form a gate electrode in which the conductive pad is sealed between the superstrate and the substrate.

3. Laminated electronic sensor device according to claim 1, wherein the source and drain electrodes extend in parallel and are spaced apart along a first direction, the device further comprising a gate electrode pad having a first side proximally adjacent to but offset away from an edge of the thin conductive material that extends orthogonal to the first direction in which the source and drain electrode extend proximal to but spaced away from the gate electrode pad.

4. Laminated electronic sensor device according to claim 1, further comprising a second superstrate (220) disposed over the first superstrate (120), in which the second superstrate supports a conductive pad (170) forming a gate electrode disposed over the aperture and the gate region.

5. Laminated electronic sensor device according to claim 4, further comprising at least one intermediate layer (210) between the first and second superstrates, the intermediate layer having at least one lateral channel for receiving or removing one of a gas and liquid from a second aperture in the second superstrate and transporting it to the aperture in the first superstrate that is above the thin conductive layer.

6. Laminated electronic sensor device according to any one of claims 1 to 5, wherein the thin conductive material (130) is a two-dimensional semi-conductor.

7. Laminated electronic sensor device according to claim 6, wherein the two2-dimensional semi-conductor is graphene.

8. Laminated electronic sensor device according to any one of claims 1 to 7, wherein the hot melt adhesive is EVA.

9. Laminated electronic sensor device according to any one of claims 1 to 8, wherein the first superstrate is a PET or a TPU film.

10. Laminated electronic sensor device according to any one of claims 1 to 9, comprising a plurality of parallel thin conductive materials and of respective source and drain electrodes.

11. Laminated electronic sensor device according to claim 10 having a fork shape, wherein each conductive material and respective source and drain electrodes are arranged in a respective tine of the fork.

12. Process for fabricating an electronic sensor device, the process comprising the steps of:
a. providing a thin conductive material (130) on a portion on of an upper surface (111) of a generally planar substrate (110),
b. providing a flexible superstrate (120) having an inside surface (122) covered by a hot melt adhesive, including:
• at least two conductive traces (150, 160) extending in a spaced apart relationship on the inside surface, and
• at least one aperture (125) with a perimeter within a boundary corresponding with the closest edges of the spaced apart conductive traces (150, 160),
c. laminating the flexible superstrate (120) so the lower surface (122) thereof adheres to the upper surface (111) of the generally planar substrate in a mutually aligned state to urge the conductive traces (150, 160) to make ohmic contact with the thin conductive material (130) while the hot melt adhesive flows to seal the conductive traces from a boundary of the aperture with the flexible superstrate.

13. Process according to claim 12, wherein the conductive traces are formed by printing a conductive ink onto the lower surface of the superstrate, and optionally on the upper surface of the substrate.

14. Process according to claim 12 or claim 13, further comprising connecting the conductive traces to a printed circuit board.

15. Process for detecting an analyte in a fluid sample, comprising providing the fluid sample to the cavity of the laminated flexible electronic sensor device according to any one of claims 1 to 11 to the fluid sample and detecting a variation in a conductance of the thin conductive material in the gate region due to an interaction of the analyte with the thin conductive material.
